# EUROPEAN PATENT SPECIFICATION

(11) **EP 4 228 829 B1**
(45) Date of publication and mention of the grant of the patent: **20.03.2024**
(21) Application number: 21848186.9
(22) Date of filing: 12.10.2021
(51) Int. Cl.: B09B 3/00

(54) **A FLEXIBLE SYSTEM FOR PROCESSING, TREATMENT AND USE OF WASTE**
FLEXIBLES SYSTEM ZUR BEHANDLUNG, VERARBEITUNG UND WIEDERVERWERTUNG VON ABFALLPRODUKTEN
SYSTÈME FLEXIBLE POUR LA REMISE, LE TRAITEMENT ET LA VALORISATION DE DÉCHETS

(30) Priority: 16.10.2020 CZ 20200566
(43) Date of publication of application: 23.08.2023
(73) Proprietor: TERDESOL SE, 15000 Praha 5, Smichov (CZ)
(72) Inventor: STEHLIK, Tomas, 35601 Staré Sedlo (CZ)
(74) Representative: Kratochvil, Vaclav
(86) International application number: PCT/IB2021/059316
(87) International publication number: WO 2022/079578

(56) References cited:
- CN-A- 108 580 520

## Description

### Technical Field

The technical solution applies to a variable system for processing, treatment and use of waste containing sorting, mechanical treatment, separation and processing of waste.

### Background Art

Currently, waste management starts with household waste collection. This is already performed on the basis of basic sorting to plastic, glass, paper, bio-waste and municipal waste. Although people are starting to have a positive approach to sorting waste, it is not guaranteed that sorted waste will then be used otherwise than deposited in landfills or eventually processed in a heating plant for energy production. When landfilling, the opportunity of full recycling which ensures re-use and thus saving of mineral resources, e.g. crude oil, etc., is lost. During thermal processing in heating plants, emissions are increased and thus air quality is deteriorated, and of course, there is not a chance for re-using; in addition, only 30% of waste is recovered this way. Therefore, the current system is completely unsuitable and outdated from the environmental and as the case may be economical point of view, and it must be replaced with a new one.

Waste sorting is designed in areas of large conurbations and in areas with a low population density. In urban areas, containers for waste separation are spaced approx. 100 m apart in residential areas. In smaller villages, large-capacity skips are used, or waste is collected at waste recycling centres. The waste recycling centre system is also used for sorting of bulky waste, especially electric waste and tyres.

The disadvantage of current solutions is primarily represented by high costs for building of municipal waste incinerators and their low energy efficiency.

CN108580520A discloses a known prior art relevant to the present invention.

### Summary of Invention

The above stated deficiencies are substantially eliminated by the variable system for processing, treatment and use of waste containing sorting, mechanical treatment, separation and processing of waste according to this invention. Its essence is that it contains a waste container provided with at least one waste amount sensor and at least one other waste motion sensor to which a waste crusher with a load sensor are connected via a batcher. The waste amount sensor, the other waste motion sensor and the load sensor are interconnected with a control unit connected to conveyor drive controllers in the waste container, the batcher and the crusher. Behind the crusher, a waste treatment plant for mechanical treatment, cleaning, drying, separation and agglomeration that is followed by a bio-gas station for processing and treatment of organic materials for energy recovery and subsequent use as compost, a sorter of the formed granules to respective types of plastics for their recycling, and a thermochemical unit for production of energy fuel in the form of gas, oil and carbon followed by at least one liquefied gas tank provided with a mixing equipment are located.

The crusher is preferably represented by a slow-running crusher with a pressure sieve to reach uniform material granulometry for other sorting and processing.

The thermochemical unit is preferably provided with an input material batching with absence of air, at least three heat sources interconnected with the control unit and thermal sensors in thermal unit retort.

The thermochemical unit is preferably provided with a device for dosing a granular material and/or an extruder for compressing the input plastic material, which is heated by pressure up to the melting point of the plastic material and thus homogenized. Such an extruder ensures airtightness at the inlet without the need for additional closures. At the same time, it is not necessary to agglomerate the material with this technology for dosing plastics, which leads to significant energy savings in a plastic processing process. Another innovative advantage of using an extruder is the temperature of the input material approaching the thermal decomposition temperature, which increases the efficiency of the whole process by accelerating the onset time of thermal decomposition.

The variable system for processing, treatment and use of waste is preferably provided with an equipment for processing of gases from the bio-gas station and from the thermochemical unit for electric energy production.

The variable system for processing, treatment and use of waste can be provided with a bio-filter with a filtration bed with height of 1.0 to 2.0 m consisting of a mixture of shredded bark, peat and coconut fibres, wherein microbial life for removal of organoleptic organic substances in low concentrations from the extracted air flow is maintained on the surface of these particles; which is provided with a pH regulator, automatic counterflow spraying and a temperature regulator in the range from 10 to 40°C.

The variable system for processing, treatment and use of waste can be located on a ship and the waste container, the batcher, the waste crusher, the treatment plant, the bio-gas station, the thermochemical unit for energy fuel production and at least one liquefied gas tank are mutually interconnected by flexible joints.

The subject of the patent is a construction of a comprehensive variable system for complete processing, treatment and use of waste. The aim is to process waste, recycle it partially and recover energy partially. The usable components, e.g. metals, will be separated and the residual proportion will be processed for further use, e.g. in agriculture, after a biological treatment. The advantage of this system is the fact that it can be adjusted to a respective locality, conditions and a variety of waste composition. A part of the technology is formed by a unified and comprehensive management system of material flows and their monitoring which results in maximum efficiency of waste processing.

After the mechanical treatment, sorting and separation enable waste separation for further processing. The uniqueness and arrangement of the system enables to respond to the needs of economical waste use, and may be adjusted even during the line operation to respond to changes on the commodity market. Technology-optical sensors for proper sorting of respective wastes are used in the facility. All sensors are designed and located at key technology spots so as to perfectly monitor each of the processes. Sensors are connected to a unified control unit of the line control. The comprehensive management system enables to respond to changes in waste composition, and to adjust the line operation so as the output commodities had the same quality and the waste was used as economically as possible.

The technology of material crushing and preparation is designed and composed for mechanical treatment and separation for further processing. The crusher crushes the input material to a precise size of respective wastes to enable their proper processing in the downstream technology. With respect to variability of the input material in waste, a slow-running crusher with a special sieve is used at the inlet after coarse separation of oversize pieces present in the waste, where process controlling in the crusher ensures even pressure on the sieve and thus uniform material granulometry for other sorting and processing is provided.

The treatment plant is represented by a technology set designed and composed for mechanical treatment, cleaning, drying, separation and agglomeration with subsequent preparation for further processing or selling of e.g. PET granules. The granules formed after the mechanical treatment and cleaning are further separated by technology-optical sensors to respective types of plastic for use in recycling or in the thermochemical unit. The composition of optical sorters and their connection in the technology enables to freely separate any type of plastic from the technology for further processing, and thus flexibly respond to market needs. The other unsorted mixed plastic unsuitable for selling is used as an admixture to energy fuels or as input to the thermochemical unit.

The bio-gas station is used for processing and treatment of organic materials for energy recovery and subsequent use as compost.

The thermochemical unit is equipment for processing plastics sorted from municipal waste, PET and tyre granules, and its output is energy fuel. Temperature distribution and measurement in the retort is ensured by proper waste distribution. The thermochemical unit is provided with the airtight dosing device different for granular materials and for plastic dosing using the extruder. The subsequent cleaning of gas and oil fractions ensures its continuity and stable quality. Gas liquefying into tanks and its mixing in tanks enables to maintain the gas quality. The technology is set up so that the output products, i.e. gas, oil and carbon, leave this technology in the same quality, which ensures very good trading with these products.

The gas management and the energy centre enable its use for production of electric energy. With respect to the fact that the output gas both from the composting plant and the thermochemical unit is cleaned and in a very high quality, electric energy for own consumption may be produced. This way after starting the whole technology set, it is able to run in the island operation within 1 hour. The rest of the el. energy may be sold to the network. All the heat formed at el. energy production is used for drying of input materials, i.e. wastes or for heating of building or is supplied to heat consumers, i.e. towns, villages, etc.

The other advantages are represented by an obvious and comprehensive waste disposal solution, intelligent use of more energy types and elimination of the environmental burden of the field. The solution represents a fully automatic system of a progressive technology. Other advantages are environmental improvement and region employment increase. The major advantage is use of 90 to 97% of wastes for recovery.

The thermal decomposition process is a very environmentally-friendly process in which organic materials can be processed and the output commodity is represented by tradeable oil products. This system brings a revolutionary solution in the field of waste disposing.

### Brief Description of Drawings

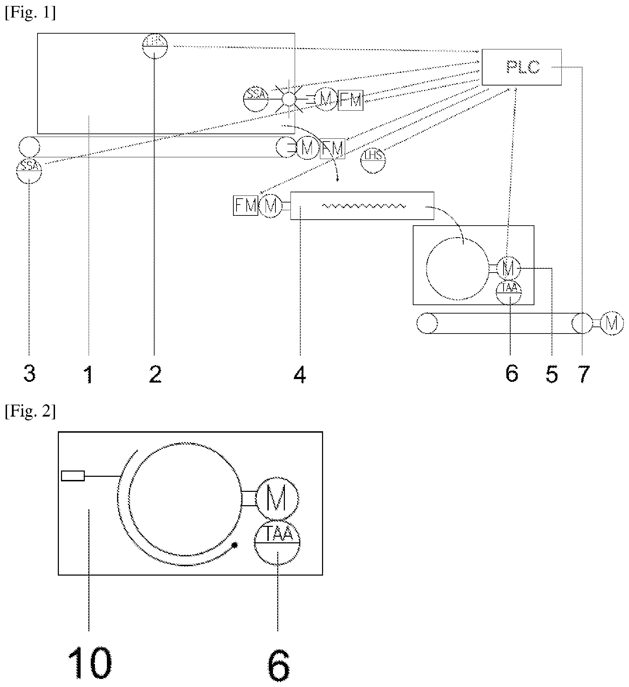

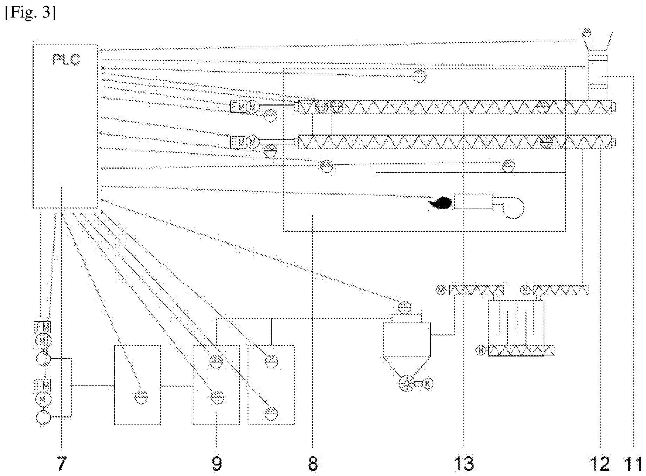

The variable system for processing, treatment and use of waste containing sorting, mechanical treatment, separation and processing of waste according to this invention will be described in more details based on particular embodiment examples using attached drawings where [Fig.1] shows the waste sorting scheme. [Fig.2] shows the waste crushing scheme. Fig. 3 shows the thermochemical unit scheme.

### Description of Embodiments

The exemplary variable system for processing, treatment and use of waste containing sorting, mechanical treatment, separation and processing of waste contains a waste container 1 provided with waste amount sensors 2 and other waste motion sensors 3. To the container 1, a waste crusher 5 is connected via a batcher 4 with a load sensor 6. The waste amount sensors 2, the other waste motion sensors 3 and the load sensor 6 are interconnected with a control unit 7 connected to conveyor drive controllers in the waste container 1, the batcher 4 and the crusher 5. The crusher 5 is represented by a slow-running crusher with a pressure sieve 10 to reach uniform material granulometry for other sorting and processing. Behind the crusher 5, a waste treatment plant for mechanical treatment, cleaning, drying, separation and agglomeration that is followed by a bio-gas station for processing and treatment of organic materials for energy recovery and subsequent use as compost, a sorter of the formed granules to respective types of plastic for their recycling, and a thermochemical unit 8 for production of energy fuel in the form of gas, oil and carbon followed by liquefied gas tanks 9 provided with a mixing equipment are located. The thermochemical unit 8 is provided with an input material batching 11 with absence of air, heat sources 12 interconnected with the control unit 7 and thermal sensors 13 in thermal unit 8 retort. The system is further provided with an equipment for processing of gases from the bio-gas station and from the thermochemical unit 8 for electric energy production.

The variable system for processing, treatment and use of waste is be provided with a bio-filter with a filtration bed with height of 1.0 to 2.0 m consisting of a mixture of shredded bark, peat and coconut fibres, wherein microbial life for removal of organoleptic organic substances in low concentrations from the extracted air flow is maintained on the surface of these particles; which is provided with a pH regulator, automatic counterflow spraying and a temperature regulator in the range from 10 to 40°C.

In another embodiment, the variable system for processing, treatment and use of waste is located on a ship, and the waste container 1, the batcher 4, the waste crusher 5, the treatment plant, the bio-gas station, the thermochemical unit 8 for energy fuel production and liquefied gas tanks 9 are mutually interconnected by flexible joints.

The waste will be brought in by collection vehicles to a structurally separated reception part of the building where it will be unloaded on a concrete floor provided with a penetration coating inclined to a drainless chamber for capturing of possible waste liquid components or leak of other liquids that could endanger the quality of the environment.

The reception part of the building will be operated by a wheel loader with a bucket that will spread the waste and separate ballast objects not suitable for processing using the mechanical biological treatment method from it. The ballast components will be stored in a close-put container and landfilled without modification.

The loader will load the waste to a hopper with a delivery conveyor that will transport the waste to the processing part of the building. The reception part will be drawn off via a bio-filter to prevent the spread of odour emissions to the surroundings.

The waste enters the primary crusher that will adjust the particle size, loosen the waste placed in bags or boxes. The crushed waste will be forwarded on the conveyor with a pourer to a magnetic separator where iron metals contained in the waste will be separated. After separating the metals, the pre-crushed waste will be forwarded to a manual separation of glass, rocks and especially plastic. The glass and the iron will be transported for recycling, the rocks will be transported to a landfill without any further use. Plastics will be used for energy processing in the thermochemical unit. The advantage of manual sorting is the option to simply expand the number of separated waste types. In case a processor of e.g. paper is found in the area, it is also possible to easily separate paper suitable for recycling from the waste.

The residual part with a large proportion of biological waste will be crushed to a fine fraction and used for active fermentation with subsequent composting.

The waste processing line will be equipped with extraction of individual workplaces where handling or pouring over of the processed waste will take place. The first extracted area will be the input crusher, then the pourer over the magnetic separator, the manual sorting line and the final crusher. The air-conditioning system will take the extracted air outside the hall where fabric dust collectors will be located. Behind these separators, a bio-filtration equipment to decrease the odour emissions will be located.

### Composting plant - fermentation building

The aim of the controlled aerobic fermentation process is to reach the decrease of the biological activity of the under-sieve fraction from mixed municipal waste sorting with high contents of biological degradable components below the respiratory activity of oxygen consumption 10 mg O2/g of dry matter. This activity is sufficiently low to prevent anaerobic processes in the waste body to form the methane gas which has approx. six times higher greenhouse effect than carbon dioxide - the natural product of biological degradation.

After this forced oxidation process, it will no longer be possible to acquire waste gas for use in the co-generation unit for production of electric energy and use of waste heat from gas burning.

One of the innovative options is a system of compost windrows located in an enclosed building with active digging-over using a digger enabling substrate spraying with an additional irrigation equipment. This process is slower but substantially less expensive.

With a correct digging and wetting mode, the proposed solution enables to reach the same effect as with using the fermentation boxes with the only difference that the process is approx. by 1 month slower. Therefore, a sufficient area is selected so that the substrate could be sufficiently delayed in the process.

The digging-over is assumed 3 to 5 times a week, according to the needs and the period of the year. The building area will be used for forming compost windrows. In the fermentation building, the intensive part of the fermentation will take place for the period of 6 weeks, and then the substrate will be transferred to the mature area.

The building will be provided with a concrete panelling to the height of 5 m to be able to spread the compost windrows on the whole building area and to minimize dustiness.

The area above the panelling will be provided with a light-transmitting material, e.g. a polycarbonate. It will therefore be an enclosed building that will be provided with an extraction system for air and water vapours, de-dusting and elimination of odour substances by sieving through a bio-filter.

### Composting plant - mature area

From the fermentation building, the material will be transferred to the area for compost maturing. It will be a prepared concrete area inclined to retention tanks where leakages of rain water through the composted material will be accumulated.

The area will be used for forming compost windrows. The period for compost material holding in this area will be 6 to 8 weeks. The compost windrows will be dugover and wetted as appropriate, approx. once a week.

### Bio-filter

Waste air bio-filtration is a method based on the use of microorganisms for decomposition or bio-transformation of harmful substances. The polluted air goes through the bio-filter filled with a porous material that is covered by a bio-mass layer. When the gas passes through the bio-filter, pollutant is captured, i.e. absorbed to the bio-mass surface and the pollutant is then bio-degraded. Thus, the basic principle of biodegradation is a combination of contaminant adsorption and bio-chemical decomposition using suitable bacterial cultures.

Inside the bio-filter, optimal conditions must be continuously kept, among others mainly humidity, pH, temperature and nutrient concentration. Before its operation, the bio-filter filling is inoculated with suitable microbial cultures and also needed inorganic nutrients are supplied.

Through the bio-filter, air from extracted areas and technologies will pass that could spread the odour load to the surroundings in case of free releasing into the air. The necessary bio-filter capacity and its size result from the air amount coming out from the air-conditioning units.

The bio-filter is equipped with a filtration bed with the height of 1.5 m consisting of a mixture of shredded bark, peat and coconut fibres. Microbial life enabling removal of organoleptic organic substances in low concentrations from the extracted air flow is maintained on the surface of these particles.

The equipment has its own pH regulation, automatic counterflow spraying, temperature regulation. During operation, it is not necessary to interfere with the equipment. The only condition is the input air temperature range ranging from 10 to 40°C.

### Sorting and separation

The technology equipment combines proven optical and mechanical processes of separation using a method which guarantees high quality sorting to recyclable material fractions. The technology process ensures a high and especially uniform quality of output materials. Mixed plastics are separated from single plastics that thanks to that may be immediately used for production of granules and agglomerates applicable in the recycling industry.

### Technology of material crushing and preparation

The technology is designed and composed to be able to process the specified input material, i.e. waste, e.g. used tyres. The line will gradually crush the input raw material to finer fractions. Its individual parts will be connected with a conveyor. The technology will contain sorters and separators of magnetic metals. E.g. steel ropes together with other extracted steel from tyres will be transferred to further processing. The usual capacity of the whole technology is 2 to 3 tons of the output crushed material per hour.

### Treatment plant

A technology set designed and composed for mechanical treatment, magnetic and optical and colour separation, pulpers and agglomeration with subsequent preparation for further processing or selling of e.g. PET granules.

### Bio-gas station

The base of the bio-gas station is formed by digestion gas-tight and water-tight chambers, of so-called garage type, when the operational volume of one chamber is approx. 800 m³ of material. Chamber emptying and filling is performed by a wheelloader. Input raw material inoculation is performed partly by mixing the fresh bio-waste - approx.60% of the batch with already fermented bio-mass - approx. 40% of the batch, and then by spraying the process water on the fermented mass in an enclosed chamber.

The bio-gas station will be designed and custom-made - based on the available amount and types of raw materials, possible location layout.

### Thermochemical unit

The ECPS system (Energy Conversion Processor System) has been designed to generate energy from all bio-degradable or synthetic wastes. These units will continuously work during production of high-quality gaseous and liquid fuels. The ECPS thermochemical systems use various waste sources that produce gaseous or liquid fuels from waste. The efficiency of ECPS systems is completely dependent on the purity and the energy contents of the waste. The whole thermochemical system is designed to meet all European standards for this equipment type. The production cycle is closed without fugitive emissions and waste-free.

The equipment is automatic with many safety systems that monitor the thermochemical process all the time to eliminate the human factor.

This kind of the thermochemical unit may be used for energy recycling of these waste types:
a. tyres
b. plastics
c. municipal waste
d. sludges from sewage treatment plants, sludges from paint shops, laundry and paper sludges
e. farm and garden waste, e.g. manure, slurry, garden waste
f. biomass and wood
g. hospital waste

### Gas management and energy centre

Equipment for processing gas from composting, the thermochemical unit, and its use for energy production

The facility for processing and energy recovery of waste is composed of several components that are stated and described above and that are mutually interconnected. The estimated area size including all service roads, office building, parking areas and storage areas with the size for processing 10 t of waste per hour is approximately 400 x 200 m. With respect to concept variability, existing unused industry premises may also be used for plant construction and thus can be revitalized.

### Industrial Applicability

The variable system according to this invention can be used especially during processing, treatment and use of wastes, especially municipal ones.

## Claims

1. A variable system for processing, treatment and use of wastes containing a waste container (1) to which a waste crusher (5) is connected via a batcher (4), behind which a waste treatment plant for mechanical treatment, cleaning, drying, separation and agglomeration that is followed by a bio-gas station for processing and treatment of organic materials for energy recovery and subsequent use as compost, a sorter of the formed granules to respective types of plastic for their recycling, and a thermochemical unit (8) for production of energy fuel in the form of gas, oil and carbon followed by at least one liquefied gas tank (9) provided with a mixing equipment are located ***characterized in that*** the waste container (1) is provided with at least one waste amount sensor (2) and at least one other waste motion sensor (3), and the waste crusher (5) is provided with a load sensor (6), wherein the waste amount sensor (2), the other waste motion sensor (3) and the load sensor (6) are interconnected with a control unit (7) connected to conveyor drive controllers in the waste container (1), the batcher (4) and the crusher(5); behind the crusher (5), the thermochemical unit (8) for production of energy fuel in the form of gas, oil, carbon is present behind which at least one liquefied gas tank (9) provided with a mixing equipment is located, wherein the crusher (5) is a slow-running crusher with a pressure sieve (10) to reach uniform material granulometry for further sorting and processing, and the thermochemical unit (8) is provided with input material batching (11) without air access, at least three heat sources (12) interconnected with the control unit (7) and temperature sensors (13) in a retort.

2. The variable system for processing, treatment and use of waste according to claim 1 ***characterized in that*** the thermochemical unit (8) is provided with a device for dosing a granular material and/or an extruder for compressing an input plastic material up to its melting point to homogenize it.

3. The variable system for processing, treatment and use of waste according to any of claim 1 or 2 ***characterized in that*** it is provided with an equipment for processing of gases from the bio-gas station and from the thermochemical unit (8) for electric energy production.

4. The variable system for processing, treatment and use of waste according to any of claim 1 to 3 ***characterized in that*** it is provided with a bio-filter with a filtration bed with height of 1.0 to 2.0 m consisting of a mixture of shredded bark, peat and coconut fibres, wherein microbial life for removal of organoleptic organic substances in low concentrations from the extracted air flow is maintained on the surface of these particles; which is provided with a pH regulator, automatic counterflow spraying and a temperature regulator in the range from 10 to 40°C.

5. The variable system for processing, treatment and use of waste according to any of claim 1 to 4 ***characterized in that*** it is located on a ship and the waste container (1), the batcher (4), the waste crusher (5), the treatment plant, the bio-gas station, the thermochemical unit (8) for energy fuel production and at least one liquefied gas tank (9) are mutually interconnected by flexible joints.

## Patentansprüche

1. Variables Abfallbehandlungs-, -aufbereitungs- und - verwertungssystem, bestehend aus einem Abfallsammelbehälter (1), an den über einen Dosierer (4) ein Abfallzerkleinerer (5) angeschlossen ist, gefolgt von einer Aufbereitungsanlage zur mechanischen Aufbereitung, Reinigung, Trocknung, Trennung und Agglomeration, mit einer nachgeschalteten Biogasanlage zur Aufbereitung und Behandlung organischer Stoffe zur energetischen Nutzung und anschließenden Verwendung als Kompost sowie einer Anlage zur Sortierung des erzeugten Granulats in verschiedene Kunststoffarten zu ihrer Wiederverwendung und einer Anlage (8) zur Erzeugung von Energiebrennstoff in Form von Gas und Öl sowie Biochar, die mit mindestens einem Tank (9) für Flüssiggas verbunden ist, wobei der Abfallsammelbehälter (1) mit mindestens einem Sensor (2) für die Abfallmenge und mindestens einem weiteren Sensor (3) für die Abfallbewegung versehen ist, der Abfallzerkleinerer (5) mit einem Beladungssensor (6) ausgerüstet ist und der Abfallmengensensor (2), ein weiterer Abfallbewegungssensor (3) und der Beladungssensor (6) mit einer Steuereinheit (7) verbunden sind, die mit den Förderantrieben im Abfallsammelbehälter (1), dem Dosierer (4) und dem Zerkleinerer (5) verschaltet ist, dem Zerkleinerer (5) eine thermochemische Anlage (8) zur Erzeugung von Energieträgern in Form von Gas, Öl und Kohle nachgeschaltet ist, der mindestens ein Flüssiggastank (9) mit einer Mischeinrichtung angeschlossen ist, der Zerkleinerer (5) als ein langsam laufender Shredder mit einem Drucksieb (10) zur Erzielung einer gleichmäßigen Granulometrie des Materials für dessen weitere Sortierung und Aufbereitung fungiert und die thermochemische Anlage (8) mit einer luftdichten Einlaufdosierung (11) des Materials sowie mindestens drei mit der Steuereinheit (7) verbundenen Wärmequellen (12) und Temperatursensoren (13) an der Retorte ausgestattet ist.

2. Variables Abfallaufbereitungs-, -behandlungs- und - verwertungssystem nach Anspruch 1, **gekennzeichnet durch** eine thermochemische Einheit (8), die mit einer Granulatdosiervorrichtung und/oder einem Extruder ausgestattet ist, welcher das zugeführte Kunststoffmaterial auf seine Schmelztemperatur verdichtet, erhitzt und dadurch seine Homogenisierung erreicht.

3. Variables System zur Behandlung, Aufbereitung und Verwertung von Abfällen nach einem der Ansprüche 1 oder 2, **gekennzeichnet durch** eine Einrichtung zur Behandlung der Gase aus der Biogasanlage und eine thermochemische Anlage (8) zur Erzeugung von Elektrizität.

4. Variables Abfallbehandlungs-, Aufbereitungs- und Verwertungssystem nach einem der Ansprüche 1 bis 3, **gekennzeichnet durch** einen Biofilter mit einem 1,0 bis 2,0 m hohen Filterbett, das aus einer Mischung von zerkleinerter Rinde, Torf und Kokos besteht, auf dessen Oberfläche mikrobielles Leben zur Entfernung organischer Verbindungen in geringen Konzentrationen aus dem Abluftstrom gefördert wird, wobei der Biofilter zusätzlich mit einer pH-Wert-Regelung, einer automatischen Gegenstrombesprühung und einer Temperaturregelung im Bereich von 10 bis 40 °C ausgerüstet ist.

5. Variables Abfallbehandlungs-, -aufbereitungs- und - verwertungssystem nach einem der Ansprüche 1 bis 4, **gekennzeichnet dadurch, dass** es auf einem Schiff installiert und der Abfallbehälter (1), Abfalldosierer (4), Abfallzerkleinerer (5), die Aufbereitungsanlage, Biogasanlage sowie die thermochemische Anlage (8) zur Erzeugung von Energiebrennstoff und mindestens ein Flüssiggastank (9) über flexible Verbindungen miteinander verbunden sind.

## Revendications

1. Système variable de préparation, de traitement et de valorisation des déchets comprenant une cuve de collecte des déchets (1) connectée via un doseur (4) à un broyeur de déchets (5), lequel broyeur est suivi d'une installation de préparation destinée au traitement mécanique, au nettoyage, au séchage, à la séparation et à l'agglomération, suivi par une installation de biogaz pour la transformation et le traitement des matières organiques en vue d'une conversion énergétique et de compostage, et par une installation pour trier les granulés produits en différents types de plastique pour leur réemploi, et une installation (8) de production de combustible énergétique sous forme de gaz, de pétrole et de biochar, laquelle est connectée à d'au moins un réservoir (9) pour le gaz liquéfié, **caractérisé en ce que** la cuve de collecte des déchets (1) est équipée d'au moins d'un capteur (2) mesurant la quantité de déchets et d'au moins d'un second capteur (3) surveillant le mouvement des déchets, et le broyeur de déchets (5) est muni d'un capteur de chargement (6), lesdits capteurs de quantité de déchets (2) et de mouvement de déchets (3) étant tous connectés à une unité de commande (7), laquelle est reliée aux systèmes de transport de la cuve de collecte de déchets (1), au doseur (4) et au broyeur (5), et ledit broyeur (5) est associé à une installation thermochimique (8) produisant de l'énergie sous forme de gaz, de pétrole et du biochar, laquelle est liée à d'au moins un réservoir de gaz liquide (9) pourvu d'un mécanisme de mixage, et le broyeur (5) est conçu comme un déchiqueteur à faible vitesse muni d'un tamis pressurisé (10) pour assurer une granulométrie uniforme du matériau, facilitant son tri et son traitement ultérieur, et l'installation thermochimique (8) est dotée d'un doseur d'entrée hermétique (11) pour le matériau, et d'au moins trois sources de chaleur (12) connectées à l'unité de commande (7) et aux capteurs de température (13) présents dans la cornue.

2. Système variable de préparation, de traitement et de valorisation des déchets selon la revendication 1, **caractérisé en ce que** l'unité thermochimique (8) est équipée d'un dispositif de dosage de granulés et/ou d'une extrudeuse pour compacter et chauffer le matériau plastique alimenté à sa température de fusion, ce qui permet d'obtenir son homogénéisation.

3. Système variable de préparation, de traitement et de valorisation des déchets selon l'une des revendications 1 ou 2, **caractérisé en ce qu'**il est équipé d'un dispositif de traitement des gaz issus de l'installation de biogaz et d'une installation thermochimique (8) de production d'électricité.

4. Système variable de préparation, de traitement et de valorisation des déchets selon l'une des revendications 1 à 3, **caractérisé en ce qu'**il comprend un biofiltre avec un lit filtrant de 1,0 à 2,0 m de hauteur, constitué d'un mélange d'écorce broyée, de tourbe et de coco, dont la surface stimule la vie microbienne en faibles concentrations afin d'éliminer les composés organiques du flux d'air sortant, équipé d'un système de contrôle du pH, d'une pulvérisation automatique à contre-courant et d'un contrôle de la température dans une plage de 10 à 40 °C.

5. Système variable de préparation, de traitement et de valorisation des déchets selon l'une des revendications 1 à 4, **caractérisé en ce qu'**il est installé sur un navire, dans lequel le conteneur de déchets (1), le doseur de déchets (4), le broyeur de déchets (5), l'installation de préparation, l'installation de biogaz, l'installation thermochimique (8) pour la production de combustible énergétique, et au moins un réservoir de gaz liquéfié (9), sont reliés entre eux par des liaisons flexibles.
